# EUROPÄISCHE PATENTSCHRIFT

(11) **EP 1 151 781 B1**
(45) Veröffentlichungstag und Bekanntmachung des Hinweises auf die Patenterteilung: **26.07.2006**
(21) Anmeldenummer: 01110116.9
(22) Anmeldetag: 03.05.2001
(51) Int. Cl.: B01D 3/14

(54) **Trennwandkolonne**
Rectification column with partition
Colonne de rectification avec cloison

(30) Priorität: 04.05.2000 DE 10021624
(43) Veröffentlichungstag der Anmeldung: 07.11.2001
(73) Patentinhaber: BASF Aktiengesellschaft, 67063 Ludwigshafen (DE)
(72) Erfinder: Rust, Harald, 67435 Neustadt (DE); Kaibel, Gerd, 68623 Lampertheim (DE)
(74) Vertreter: Isenbruck, Günter

(56) Entgegenhaltungen:
- EP-A- 0 804 951
- DE-A- 3 302 525

## Beschreibung

Die Erfindung betrifft eine Trennwandkolonne. Bei der Auftrennung von Zulaufgemischen in mehr als zwei reine Fraktionen - z.B. in Leichtsieder, Mittelsieder und Schwersieder - müssen normalerweise mehrere Destillaionskolonnen eingesetzt werden. Um den apparativen Aufwand zu begrenzen, setzt man bei der Auftrennung von Vielstoffgemischen, die aus mehr als zwei Komponenten bestehen, Kolonnen ein, die sich für die Seitenentnahme flüssiger und gasförmiger Medien eignen. Die Anwendungsmöglichkeit von Destillaionskolonnen mit Seitenabzügen ist jedoch dadurch eingeschränkt, daß die an den Seitenabzugstellen entnommenen Produkte normalerweise nicht völlig rein sind. Bei Seitenentnahmen im Verstärkungsteil einer Destillationsvorrichtung, die üblicherweise in flüssiger Form erfolgen, enthalten die Seitenprodukte noch Anteile an leichtsiedenden Komponenten, die im Normalfall über Kopf abgetrennt werden. Entsprechendes gilt für Seitenentnahmen im Abtriebsteil, die meist dampfförmig erfolgen und bei denen entnommene Seitenprodukte noch Anteile des Schwersieders aufweisen. Bei der Verwendung solcher konventioneller Seitenabzugskolonnen werden praktisch immer verunreinigte Seitenprodukte erhalten. Die Verwendung von Seitenabzugskolonnen ist daher zur Gewinnung von Reinstoffen ungeeignet. Insbesondere zur Isolierung von mittelsiedenden Reinstoffen aus Vielstoffgemischen müssen somit in der Regel Kolonnenordnungen, die aus mindestens zwei separaten Kolonnen bestehen, eingesetzt werden. Eine vorteilhafte Alternative sind sogenannte Trennwandkolonnen oder thermisch gekoppelte Destillationskolonnen. Der Einsatz dieser ermöglicht es, Seitenprodukte, also mittelsiedende Komponenten, ebenfalls in reiner Form aus Vielstoffgemischen zu isolieren. Eine Trennwandkolonne ist im Prinzip eine Vereinfachung eines Systems von thermisch gekoppelten Destillationskolonnen. Bei Trennwandkolonnen ist im mittleren Bereich eine Trennwand angebracht. Diese erstreckt sich oberhalb und unterhalb der Zulaufstelle. Auf der anderen Seite, die sich gegenüber der Zulaufstelle befindet, ist mindestens eine Seitenabzugsstelle angeordnet, die sich auf gleicher Höhe, unterhalb oder oberhalb der Zulaufstelle befindet. Zwischen Seitenabzugsstelle und Zulaufstelle befindet sich die Trennwand. Diese ist in der Regel senkrecht angeordnet. In dem Kolonnenbereich, der durch die Trennwand geteilt wird, ist eine Quervermischung von Flüssigkeits- und Brüdenströmen nicht möglich. Dadurch verringert sich bei der Auftrennung von Vielstoffgemischen die Zahl der insgesamt benötigten Destillationskolonnen. Eine Trennwandkolonne weist in der Regel folgende Segmente auf:
- einen oberen Kolonnenbereich, der sich oberhalb der Trennwand befindet,
- einen Zulaufteil, der sich auf der Seite der Zulaufstelle befindet und seitlich durch eine Trennwand abgetrennt wird,
- einen Entnahmeteil, der sich auf der Seite der Seitenabzugsstelle befindet und seitlich durch die Trennwand abgegrenzt wird und
- einen unteren Kolonnenbereich, der sich unterhalb der Trennwand befindet.

Trennwandkolonnen und thermisch gekoppelte Kolonnen bieten gegenüber der Anordnung von konventionellen Destillationskolonnen sowohl hinsichtlich des Energiebedarfs als auch der Investitionskosten Vorteile und werden daher bevorzugt industriell eingesetzt. Zu Destillationszwecken eingesetzte thermisch gekoppelte Destillationskolonnen oder Trennwandkolonnen sind in der Regel als Füllkörper oder geordnete Packungen enthaltende Packungskolonnen oder als Bodenkolonnen ausgestaltet.

Die Anwendung von Trennwandkolonnen ist hinsichtlich des Energiebedarfs und der Investitionskosten als vorteilhaft anzusehen.

Im Fall von industriell eingesetzten Trennwandkolonnen wird gemäß der DE-A-43 36 983 die Trennwand meist in den Innenmantel einer Kolonne eingeschweißt. Dabei sind enge Fertigungstoleranzen einzuhalten, damit die Trennwand den Zulaufteil vom Entnahmeteil möglichst vollständig abdichtet - Undichtigkeiten zwischen Trennwand und Innenmantel der Kolonne verursachen einen unerwünschten Stoffaustausch zwischen dem Zulaufteil und dem Entnahmeteil, wodurch die Reinheit der erhaltenen Produkte negativ beeinträchtigt wird. Um die erforderlichen engen Toleranzen einzuhalten, wird bei der Herstellung von Trennwandkolonnen, die Durchmesser unterhalb von ca. 0,8 m aufweisen, in der Regel gemäß der DE-A-43 36 986 eine abweichende Fertigungsmethode angewandt, bei der zusätzlich Halbschalen auf die Trennwand aufgeschweißt werden.

Vorstehend genannte Fertigungsmethoden sind insbesondere für die Konstruktion kleinerer Trennwandkolonnen aufwendig und eignen sich insbesondere nicht für den Bau von Trennwandkolonnen, die ein Durchmesser von weniger als 0,2 m aufweisen. Somit sind diese Herstellungsmethoden insbesondere für Labor-, Technikums- und kleineren Produktionskolonnen zeit- und kostenaufwendig bzw. ungeeignet.

Das Dokument EP-A-0 804 951 beschreibt Trennwandkolonnen, bei denen die Trennwand mittels an der Kolonnenwand angebrachten Führungsschienen oder Federn befestigt ist.

Der Erfindung liegt die Aufgabe zugrunde, eine Trennwandkolonne bereitzustellen, deren Trennwand einfach und effektiv befestigt ist. Der entsprechende Befestigungsmechanismus soll insbesondere bei der Fertigung von kleinen Trennwandkolonnen vorteilhaft sein.

Die Lösung dieser Aufgabe geht aus von einer Trennwandkolonne aufweisend als Segmente,
a) einen oberen Kolonnenbereich,
b) einen Zulaufteil,
c) einen Entnahmeteil und
d) einen unteren Kolonnenbereich,
wobei der Zulaufteil b) und der Entnahmeteil c) durch eine in der Kolonne befestigte Trennwand seitlich voneinander abgetrennt sind und die Trennwand zwischen dem oberen Kolonnenbereich a) und dem unteren Kolonnenbereich d) angeordnet ist.

Die Lösung dieser Aufgabe ist dann dadurch gekennzeichnet, daß die Trennwand zumindest teilweise aus einem elastischen Material ausgebildet ist, die Trennwand bezüglich ihrer Breite ein geringes Übermaß aufweist und die Befestigung der Trennwand in der Kolonne dadurch erfolgt, daß die Trennwand auf den Innenmantel der Kolonne eine elastische Rückstellkraft ausübt.

Als elastisches Material soll solches verstanden werden, daß reversibel verformbar ist. Als nicht elastisches Material soll beispielsweise Glas oder Keramik verstanden werden. Bei elastischem Material wird nach Verformung des aus dem elastischen Material bestehenden Körpers in dem Körper eine Rückstellkraft erzeugt, die solange bestehen bleibt, bis der Körper seine ursprüngliche Form wieder annimmt (bis die Verformung aufgehoben ist).

Daß die Trennwand bezüglich ihrer Breite ein geringes Übermaß aufweist, soll in der Regel bedeuten, daß die Trennwand etwas breiter ist als der Innendurchmesser der Kolonne (dies gilt für symmetrische, zylindrisch geformte Kolonnen - Normalfall). Als geringes Übermaß soll bis zu etwa maximal 5 % der Länge des Kolonneninnendurchmessers verstanden werden. Das geringe Übermaß der Trennwand verursacht letztendlich eine Stauchung der Trennwand, was sich in der Regel in einer leichten Wölbung der Trennwand bemerkbar macht.

Die Befestigung der Trennwand in der Kolonne erfolgt dadurch, daß die Trennwand auf den Innenmantel der Kolonne eine elastische Rückstellkraft ausübt. Dies bedeutet in der Regel, daß die Trennwand mit ihren beiden Seitenrändern am Innenmantel der Kolonne aufliegt, die Trennwand leicht gebogen ist - also gestaucht ist und somit unter Spannung steht, wodurch die Trennwand in der Kolonne praktisch festgeklemmt wird. Die Abdichtung der Trennwand gegen den Innenmantel der Kolonne erfolgt somit durch die "Federwirkung" der in geringem Übermaß hergestellten Trennwand. Die geeigneten Passungen werden nach den üblichen Konstruktionsprinzipien festgelegt und ergeben sich aus der Bauart der Trennwand, ihrer Steifigkeit und der Fertigungstoleranz des Kolonneninnenmantels.

Der Vorteil der erfindungsgemäßen Trennwandkolonne ist, daß diese einfach und kostengünstig hergestellt werden kann - die Trennwand ist leicht ein- und ausmontierbar. Die Trennwand läßt sich insbesondere in kleine Kolonnen, wie Labor-oder Technikumskolonnen, leicht einbauen. Da die Trennwand auch einfach aus der Kolonne herausnehmbar ist, kann die Kolonne leicht umgerüstet werden.

Meist ist die Trennwand vollständig aus einem elastischen Material ausgebildet.

Die Trennwand liegt in der Regel als ein in einem Stück gefertigtes Band vor.

Das Material, aus dem die Trennwand ausgebildet ist, enthält häufig Kunststoff, beispielsweise Polytetrafluorethylen. Die Trennwand kann auch vollständig aus Kunststoff bestehen.

Das Material, aus dem die Trennwand ausgebildet ist, weist häufig korrosionsbeständige metallische Werkstoffe, wie Chrom/Nickel-haltige Edelstähle, auf. Die Trennwand kann vollständig aus metallischen Werkstoffen bestehen.

Häufig sind die seitlichen Ränder der Trennwand angefast, wobei der Anfaswinkel bevorzugt 20 bis 60° beträgt. Besonders bevorzugt ist in der Regel ein Anfaswinkel von 30 bis 45°. Durch das Anfasen wird die Steifigkeit im Randbereich herabgesetzt und eine verbesserte Abdichtung erreicht.

Die Trennwand liegt in der Regel gerade oder Z- oder U-förmig gebogen in der Kolonne vor. Falls die Trennwand Z- oder U-förmig gebogen ist, liegt die Trennwand in ihrem mittleren Bereich im wesentlichen gerade (bzw. nur leicht gewölbt) vor, wobei nur die Ränder, die am Innenmantel der Kolonne aufliegen, entsprechend ausgeformt sind. Durch eine Z- oder U-förmige Biegung der Trennwand können größere Unrundheiten des Kolonneninnenmantels toleriert werden, da durch die Z- bzw. U-Förmigkeit der Trennwand eine höhere Dichtigkeit gewährleistet wird.

Meist ist die Fertigungstoleranz des Innendurchmessers der Kolonne < 1,5 mm, bevorzugt < 1 mm.

Häufig ist die Trennwand vollständig aus einem metallischen Werkstoff ausgebildet und die Wandstärke der Trennwand beträgt 0,05 bis 1 mm, bevorzugt 0,1 bis 0,3 mm. Andererseits kann die Trennwand vollständig aus Kunststoff ausgebildet sein und die Wandstärke der Trennwand beträgt dann in der Regel 1 bis 10 mm, bevorzugt 2 bis 5 mm. Die Dicke der Trennwand richtet sich im Prinzip danach, daß die Trennwand ausreichend fest und steif, jedoch noch flexibel ist.

Zur Montage wird die Trennwand mit einer Länge von in der Regel bis zu 3 m in die Kolonne gezogen - die Trennwand wird in den Kolonnenschuß oder in mehrere Kolonnenschüsse übereinander eingezogen.

Die anliegende Zeichnung zeigt,
- in Fig. 1 und Fig. 2: Schemata von Trennwandkolonnen,

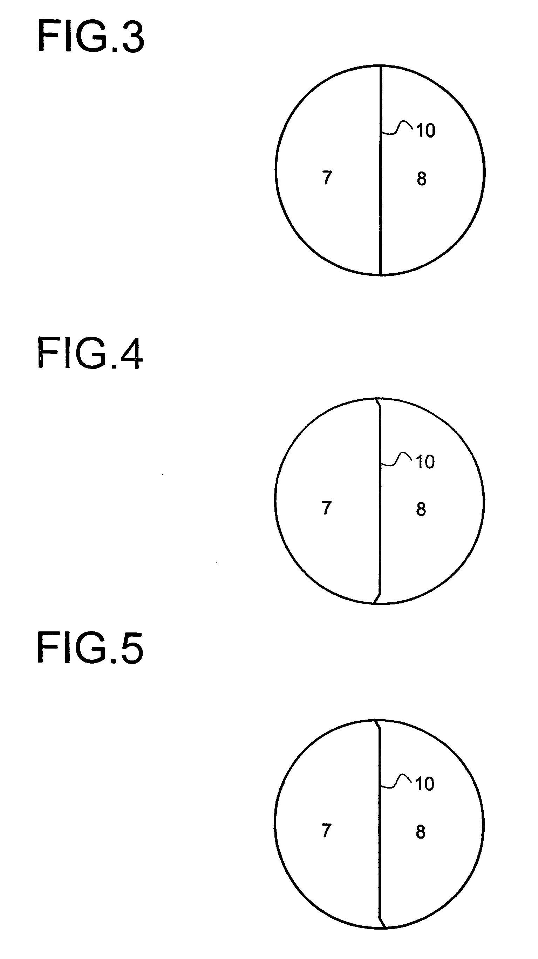

- in Fig. 3: eine in die Kolonne eingebaute, gerade Trennwand,
- in Fig. 4: eine in die Kolonne eingebaute, U-förmig gebogene Trennwand,
- in Fig. 5: eine in die Kolonne eingebaute, Z-förmig gebogene Trennwand und
- in Fig. 6: einen angefasten Rand einer Trennwand.

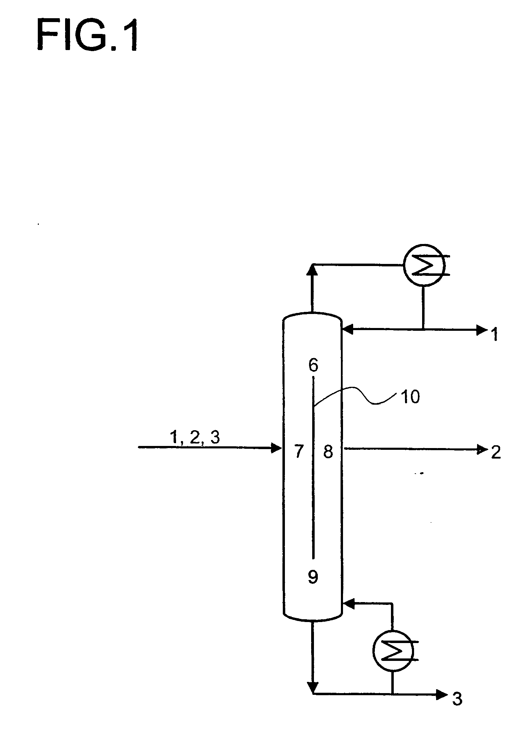

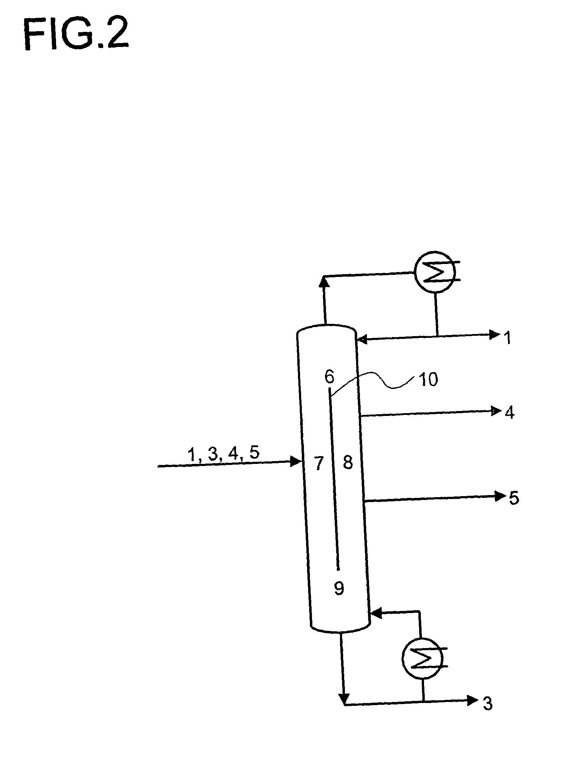

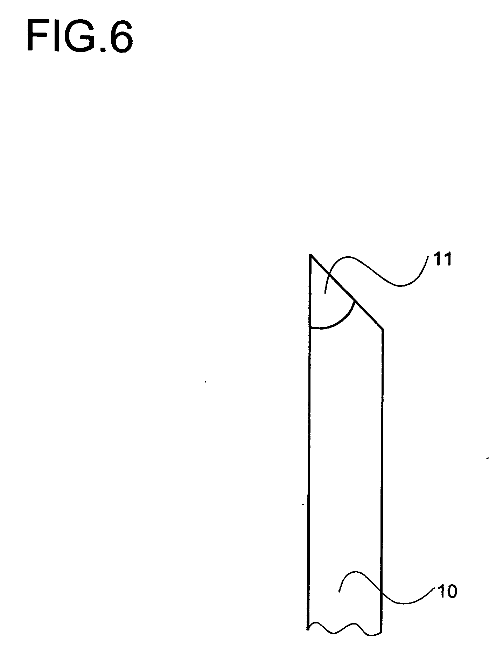

In Fig. 1 und Fig. 2 wird schematisch aufgezeigt, wie in einer Trennwandkolonne ein aus Leichtsieder 1, Mittelsieder 2 und Schwersieder 3 bestehendes Ausgangsgemisch aufgetrennt wird. In der in Fig. 2 gezeigten Darstellung besteht der Mittelsieder 2 aus zwei Komponenten 4; 5. In der Trennwandkolonne sind als Segmente ein oberer Kolonnenbereich 6, ein Zulaufteil 7, ein Entnahmeteil 8 und ein unter Kolonnenbereich 9 enthalten. Die Kolonne wird in der Mitte durch die Trennwand 10 aufgeteilt. In Fig. 6 ist der angefaste Rand einer Trennwand schematisch aufgezeigt, wobei der Anfaswinkel 11 eingezeichnet ist.

Im folgenden soll die Erfindung anhand von Ausführungsbeispielen näher erläutert werden.

### Ausführungsbeispiel

Es wurden Kolonnen mit den Durchmessern von 43 mm, 65 mm, 80 mm, 135 mm und 170 mm gefertigt. Die Kolonnenmäntel bestanden aus Glas. Die flexiblen, ebenen Trennwände waren aus Edelstahl 1.4571 gefertigt. Die Wandstärke der Trennwände wurde entsprechend dem Kolonnendurchmesser angepaßt. Sie betrug bei einem Kolonnendurchmesser von 43 mm 0,1 mm, bei einem Kolonnendurchmesser von 65 und 80 mm 0,1 mm und bei einem Kolonnendurchmesser von 135 und 170 mm 0,25 mm. Das Übermaß der Trennwände gegen den Kolonnendurchmesser betrug bei dem Kolonnendurchmesser von 43 mm 0,8 mm, bei dem Kolonnendurchmesser von 65 und 80 mm 1,0 mm und bei dem Kolonnendurchmesser von 135 und 170 mm 1,5 mm. Die Trennwände waren seitlich nicht angefast. Es wurde eine gute Abdichtung gegen die Kolonnenwand erzielt, bei der es sogar möglich war, einseitig Flüssigkeit über einen Zeitraum von mehr als 2 Stunden anzustauen. Als Trenneinbauten wurden Maschendrahtringe, Raschigringe und Gewebepackungen aus Metall verwendet. Die Trennleistung war ebenso gut wie bei aufwendig hergestellten Trennwandkolonnen, die fest eingebaute Trennwände aufweisen.

## Patentansprüche

1. Trennwandkolonne aufweisend als Segmente,
a) einen oberen Kolonnenbereich (6),
b) einen Zulaufteil (7),
c) einen Entnahmeteil (8) und
d) einen unteren Kolonnenbereich (9),
wobei der Zulaufteil b) (7) und der Entnahmeteil c) (8) durch eine in der Kolonne befestigte Trennwand (10) seitlich voneinander abgetrennt sind und die Trennwand (10) zwischen dem oberen Kolonnenbereich a) (6) und dem unteren Kolonnenbereich d) (9) angeordnet ist, **dadurch gekennzeichnet, daß** die Trennwand (10) zumindest teilweise aus einem elastischen Material ausgebildet ist, die Trennwand (10) bezüglich ihrer Breite ein geringes Übermaß aufweist und die Befestigung der Trennwand (10) in der Kolonne **dadurch** erfolgt, daß die Trennwand auf den Innenmantel der Kolonne eine elastische Rückstellkraft ausübt.

2. Trennwandkolonne nach Anspruch 1, **dadurch gekennzeichnet, daß** die Trennwand (10) vollständig aus einem elastischen Material ausgebildet ist.

3. Trennwandkolonne nach Anspruch 1 oder 2, **dadurch gekennzeichnet, daß** die Trennwand (10) als ein in einem Stück gefertigtes Band vorliegt.

4. Trennwandkolonne nach einem der Ansprüche 1 bis 3, **dadurch gekennzeichnet, daß** das Material, aus dem die Trennwand (10) ausgebildet ist, Kunststoff, bevorzugt Polytetrafluorethylen, enthält.

5. Trennwandkolonne nach einem der Ansprüche 1 bis 4, **dadurch gekennzeichnet, daß** das Material, aus dem die Trennwand (10) ausgebildet ist, korrosionsbeständige metallische Werkstoffe, bevorzugt chrom-nickelhaltige Edelstähle, aufweist.

6. Trennwandkolonne nach einem der Ansprüche 1 bis 5, **dadurch gekennzeichnet, daß** die seitlichen Ränder der Trennwand (10) angefast sind, wobei der Anfaswinkel (11) bevorzugt 20 bis 60° beträgt.

7. Trennwandkolonne nach einem der Ansprüche 1 bis 6, **dadurch gekennzeichnet, daß** die Trennwand (10) gerade oder Z- oder U-förmig gebogen in der Kolonne angeordnet ist.

8. Trennwandkolonne nach einem der Ansprüche 1 bis 7, **dadurch gekennzeichnet, daß** die Fertigungstoleranz des Innendurchmessers der Kolonne kleiner 1,5 mm, bevorzugt kleiner 1 mm, ist.

9. Trennwandkolonne nach einem der Ansprüche 1 bis 3 und 5 bis 8, **dadurch gekennzeichnet, daß** die Trennwand (10) vollständig aus einem metallischen Werkstoff ausgebildet ist und die Wandstärke der Trennwand (10) 0,05 bis 1 mm, bevorzugt 0,1 bis 0,3 mm, beträgt.

10. Trennwandkolonne nach einem der Ansprüche 1 bis 4 und 6 bis 8, **dadurch gekennzeichnet, daß** die Trennwand (10) vollständig aus Kunststoff ausgebildet ist und die Wandstärke der Trennwand (10) 1 bis 10 mm, bevorzugt 2 bis 5 mm, beträgt.

## Claims

1. A dividing wall column comprising as segments
a) an upper column region (6),
b) an inflow section (7),
c) an offtake section (8) and
d) a lower column region (9),
where the inflow section b) (7) and the offtake section c) (8) are separated from one another laterally by a dividing wall (10) fixed in the column and the dividing wall (10) is located between the upper column region a) (6) and the lower column region d) (9), wherein the dividing wall (10) is constructed at least partly of an elastic material, the dividing wall (10) has a slightly overdimensional width and the dividing wall (10) is fixed in the column by the dividing wall exercising an elastic recovery force on the interior wall of the column.

2. The dividing wall column according to claim 1, wherein the dividing wall (10) is constructed entirely of an elastic material.

3. The dividing wall column according to claim 1 or 2, wherein the dividing wall (10) is a strip manufactured in one piece.

4. The dividing wall column according to any of claims 1 to 3, wherein the material of which the dividing wall (10) is constructed comprises plastic, preferably polytetrafluoroethylene.

5. The dividing wall column according to any of claims 1 to 4, wherein the material of which the dividing wall (10) is constructed comprises corrosion-resistant metallic materials, preferably chromium-nickel-containing stainless steels.

6. The dividing wall column according to any of claims 1 to 5, wherein the lateral edges of the dividing wall (10) are chamfered, with the angle of chamfer (11) preferably being from 20 to 60°.

7. The dividing wall column according to any of claims 1 to 6, wherein the dividing wall (10) is straight or bent into a Z or U shape when installed in the column.

8. The dividing wall column according to any of claims 1 to 7, wherein the manufacturing tolerance of the internal diameter of the column is less than 1.5 mm, preferably less than 1 mm.

9. The dividing wall column according to any of claims 1 to 3 and 5 to 8, wherein the dividing wall (10) is constructed entirely of a metallic material and the thickness of the dividing wall (10) is from 0.05 to 1 mm, preferably from 0.1 to 0.3 mm.

10. The dividing wall column according to any of claims 1 to 4 and 6 to 8, wherein the dividing wall (10) is constructed entirely of plastic and the thickness of the dividing wall (10) is from 1 to 10 mm, preferably from 2 to 5 mm.

## Revendications

1. Colonne de distillation à paroi de séparation présentant, comme segments :
a) une zone supérieure de colonne (6),
b) une partie d'écoulement (7),
c) une partie de prélèvement (8), et
d) une zone inférieure de colonne (9),
la partie d'écoulement b) (7) et la partie de prélèvement c) (8) étant séparées latéralement l'une de l'autre par une paroi de séparation (10) fixée dans la colonne et la paroi de séparation (10) étant agencée entre la zone supérieure de colonne a) (6) et la zone inférieure de colonne d) (9),
**caractérisée en ce que** la paroi de séparation (10) est réalisée au moins en un matériau élastique, la paroi de séparation (10), en fonction de sa largeur, présentant une faible surmesure et la fixation de la paroi de séparation (10) s'effectuant dans la colonne de sorte que la paroi de séparation exerce, sur la manteau interne de la colonne, une force de rappel élastique.

2. Colonne de distillation selon la revendication 1, **caractérisée en ce que** la paroi de séparation (10) est réalisée entièrement en matériau élastique.

3. Colonne de distillation selon la revendication 1 ou 2, **caractérisée en ce que** la paroi de séparation (10) est une bande fabriquée d'une seule pièce.

4. Colonne de distillation selon l'une quelconque des revendications 1 à 3, **caractérisée en ce que** le matériau, dans lequel est réalisée la paroi de séparation (10), contient du plastique, de préférence du polytétrafluoroéthylène.

5. Colonne de distillation selon l'une quelconque des revendications 1 à 4, **caractérisée en ce que** le matériau, dans lequel est réalisée la paroi de séparation (10), présente des matières métalliques résistant à la corrosion, de préférence des aciers nobles contenant du chrome et du nickel.

6. Colonne de distillation selon l'une quelconque des revendications 1 à 5, **caractérisée en ce que** les bords latéraux de la paroi de séparation (10) sont biseautés, l'angle de biseautage (11) étant de préférence situé entre 20 et 60°.

7. Colonne de distillation selon l'une quelconque des revendications 1 à 6, **caractérisée en ce que** la paroi de séparation (10) est agencée dans la colonne droite ou pliée en Z ou en U.

8. Colonne de distillation selon l'une quelconque des revendications 1 à 7, **caractérisée en ce que** la tolérance de fabrication du diamètre intérieur de la colonne est plus petite que 1,5 mm, de préférence plus petite que 1 mm.

9. Colonne de distillation selon l'une quelconque des revendications 1 à 3 et 5 à 8, **caractérisée en ce que** la paroi de séparation (10) est réalisée entièrement en matière métallique et que l'épaisseur de paroi de la paroi de séparation (10) est située entre 0,05 et 1 mm, de préférence 0,1 et 0,3 mm.

10. Colonne de distillation selon l'une quelconque des revendications 1 à 4 et 6 à 8, **caractérisée en ce que** la paroi de séparation (10) est réalisée entièrement en plastique et que l'épaisseur de paroi de la paroi de séparation (10) est située entre 1 et 10 mm, de préférence 2 et 5 mm.
